# EUROPÄISCHE PATENTSCHRIFT

(11) **EP 0 725 458 B1**
(45) Veröffentlichungstag und Bekanntmachung des Hinweises auf die Patenterteilung: **17.01.2001**
(21) Anmeldenummer: 95113093.9
(22) Anmeldetag: 21.08.1995
(51) Int. Cl.: H01R 4/24, H02G 3/04

(54) **Profilschiene eines Möbels oder eines sonstigen Gewerkes**
Profiled rail for furniture of other structural element
Rail profilé d'un meuble ou d'un autre élément

(30) Priorität: 06.09.1994 DE 9414383 U
(43) Veröffentlichungstag der Anmeldung: 07.08.1996
(73) Patentinhaber: SCHÜCO International KG, 33609 Bielefeld (DE)
(72) Erfinder: Redecker, Detlef, D-32049 Herford (DE)
(74) Vertreter: Stracke, Alexander, Dipl.-Ing.

(56) Entgegenhaltungen:
- EP-A- 0 563 887
- FR-A- 2 303 400
- US-A- 5 072 343

## Beschreibung

Die Erfindung bezieht sich auf eine Profilschiene als tragendes Bauteil eines Gestells für Ausstellungs- oder Messestände, eines Regals, eines Möbels oder eines anderen Gewerkes mit einer zur Außenseite geöffneten Nut zur Aufnahme zweier parallel zueinander verlaufender elektrischer Leitungen, wobei in den seitlichen Nutwänden hinterschnittene Flächen zur formschlüssigen und/oder kraftschlüssigen Festlegung eines Adapters vorgesehen sind.

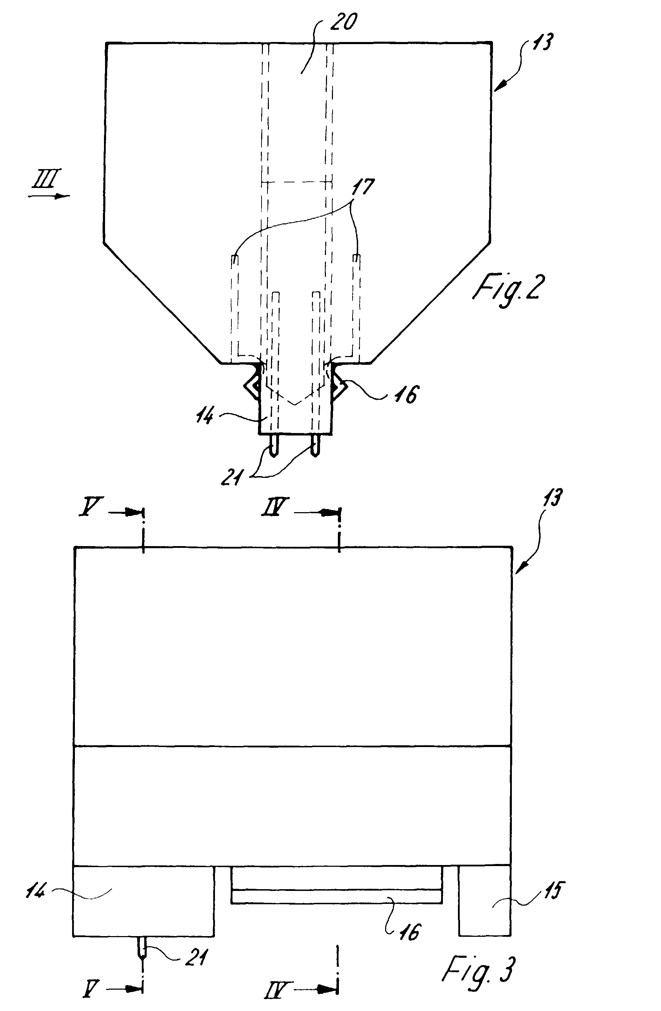

Es ist eine Profilschiene dieser Art bekannt (US-A-5 072 343), die die Eckschienen einer Vitrine bildet.
In einer zur Außenseite geöffneten Nut dieser Eckschiene kann entsprechend den Figuren 2 und 10 ein extrudiertes, eine elektrische Isolation bildendes Kunststoffprofil angeordnet werden, das zwei Aufnahmerinnen für elektrische Leiterdrähte aufweist, die von den Aufnahmerinnen nur zum Teil umschlossen werden. Durch die sich in Längsrichtung der Aufnahmerinnen erstreckenden schlitzförmigen Öffnungen werden Kontaktstifte eines Adapters bis zur Berührung mit den elektrischen Leiterdrähten eingeführt. Große Teile dieser in Längsrichtung der Profilschiene verlaufenden Öffnungen der Aufnahmerinnen liegen frei, so daß ein Schutz gegen die stromführenden Leiterteile nicht gegeben ist.

Der Erfindung liegt die Aufgabe zugrunde, eine Profilschiene der eingangs genannten Art so zu gestalten, daß die Montage und Halterung der elektrischen Leitungen vereinfacht wird.

Diese Aufgabe wird erfindungsgemäß dadurch gelöst, daß in dem Boden der Nut Rinnen für elektrische Kabel angeordnet und die Rinnen als Kreisausformungen ausgebildet sind, die in der Bodenmitte ineinander übergehen und sich geringfügig in den Wandungsbereich erstrecken.
Hierdurch werden die in die Rinnen eingelegten Kabel formschlüssig in der Nut fixiert.

Um zu vermeiden, daß die Profilschiene in Spannung liegt, werden die Kabel, die vorzugsweise als Litzenkabel ausgeführt werden, mit einem Mantel umschlossen, der aus elektrischem Isolationsmaterial besteht. Die in die Rinnen eingesetzten Kabel können sich in der Nutmitte gegeneinander abstützen und werden dann formschlüssig in den sich in die Nutwandungen erstreckenden Rinnen festgelegt.

Bei einer vorteilhaften Ausführungsform weisen die Wände der Nut benachbart der Nutöffnung Ausnehmungen auf, in die Befestigungselemente eines Adapters eingefedert werden.

Der Adapter ist mit Stromkontaktstiften ausgerüstet, die sich bei in die Nut eingesetztem Adapter bis in das zugeordnete Kabel erstrecken und zu einer Beleuchtung führen, die an dem Adapter oder an adapterfesten Teilen befestigt ist.

Weitere Ausgestaltungen der Erfindung ergeben sich aus den Unteransprüchen.

Ein Ausführungsbeispiel der erfindungsgemäßen Profilschiene wird im folgenden beschrieben.

Es zeigen:
- Figur 1: eine Profilschiene im Querschnitt,
- Figur 2: die Stirnansicht eines in die nach oben offene Nut der Profilschiene nach Figur 1 einsetzbaren Adapters,
- Figur 3: eine Ansicht in Richtung des Pfeiles III in Fig. 2,
- Figur 4: den in die Nut der Profilschiene nach Fig. 1 eingesetzten Adapter im Schnitt nach der Linie IV-IV in Fig. 3,
- Figur 5: den in die Nut der Profilschiene nach Figur 1 eingesetzten Adapter im Schnitt nach der Linie V-V in Fig. 3 und

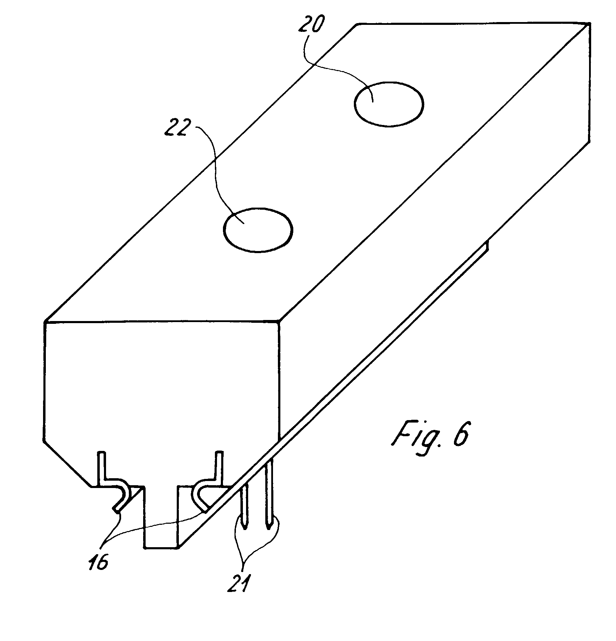

- Figur 6: einen Adapter in perspektivischer Darstellung.

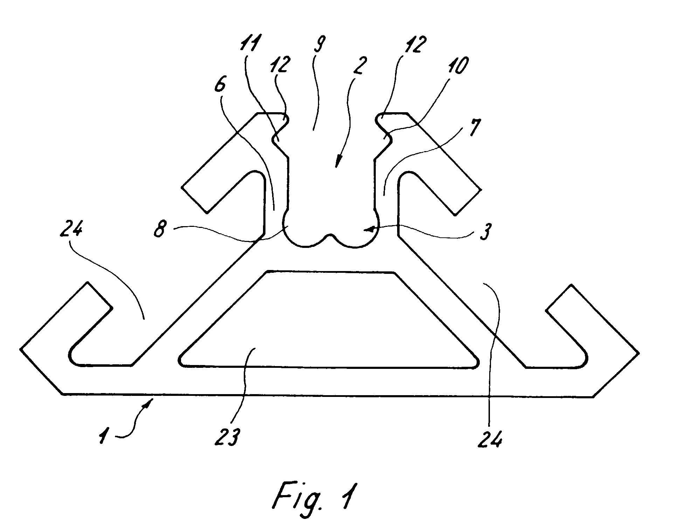

Die in der Figur 1 aufgezeigte Profilschiene 1 ist im Querschnitt dreieckförmig ausgebildet und weist eine rechteckförmige, nach außen geöffnete Nut 2 auf, deren Boden durch zwei parallel zueinander verlaufende Rinnen 3 gebildet wird, die zur Einlagerung und Festlegung eines zylindrischen Kabels 4 dienen. Diese Kabel sind vorzugsweise als Litzenkabel ausgebildet und weisen einen Mantel aus elektrischem Isoliermaterial auf.

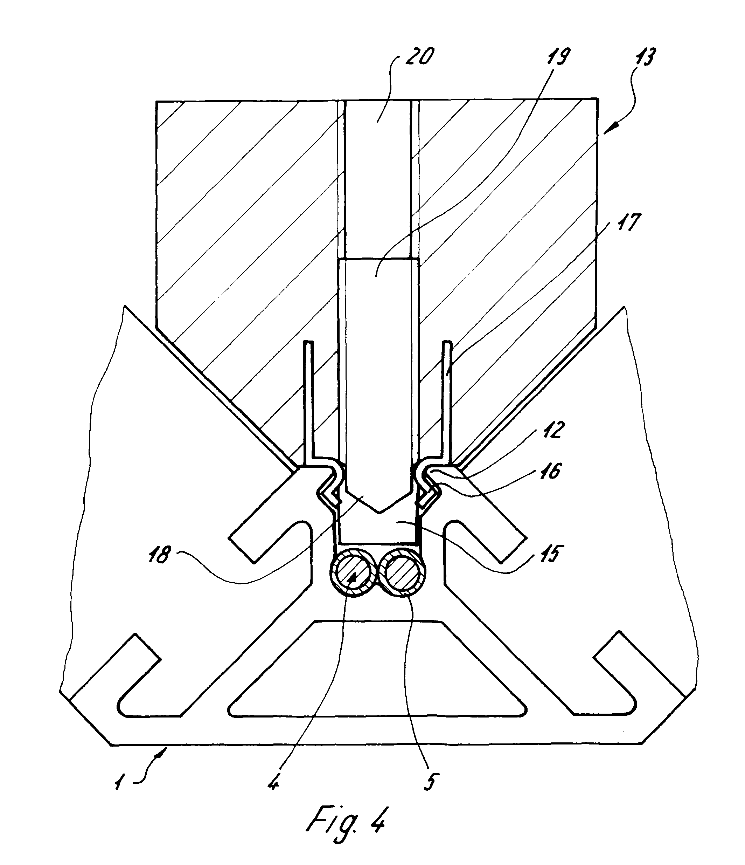

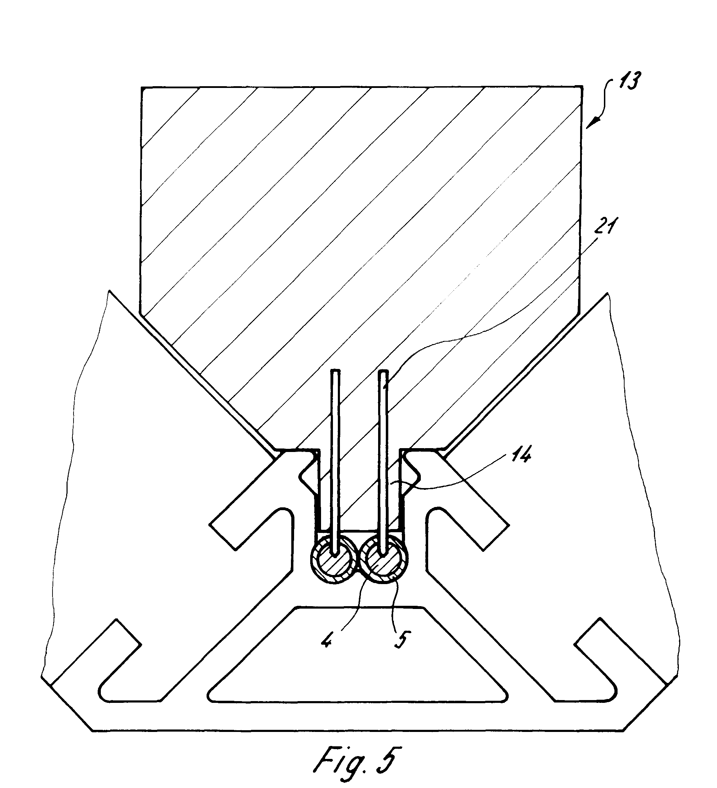

In dem Ausführungsbeispiel nach der Fig. 1 und den Figuren 4 und 5 sind die Rinnen 3 als Kreisausformungen ausgebildet, die in der Bodenmitte der Nut 2 ineinander übergehen und sich geringfügig in den Bereich der Wandungen 6 und 7 erstrecken. Durch diese Raumform der Rinnen werden die eingelegten Kabel, die sich im mittleren Bereich, wie sich aus den Fig. 4 und 5 ergibt, aneinander abstützen und die mit ihren Mänteln 5 aus Isolationsmaterial in die Wandungsausnehmungen 8 sich erstrecken, in diesen Rinnen form- und kraftschlüssig festgelegt.

Die Nutwandungen 6,7 sind benachbart der Nutöffnung 9 mit Ausnehmungen 10,11 versehen, so daß sich Vorsprünge 12 ergeben, die die Nutbegrenzungskanten der Nutöffnung 9 bilden.

Nach dem Einlegen der Kabel 4 in die Rinnen 3 wird ein Adapter 13 auf die Profilschiene 1 gesetzt, der mit rechteckförmigen Stegen 14,15 ausgerüstet ist, die sich in die Nut 2 erstrecken und in einem geringen Abstand oberhalb der Kabel 4 enden. Der Adapter 13 wird aus einem isolierenden Kunststoff gefertigt.

Aus der Fig. 4 ergibt sich, daß der Adapter 13 an der Profilschiene 1 durch federnde, aus Blech gefertigte Klemmschenkel 16 festgelegt wird, deren Befestigungsteil 17 im Adapterkörper eingebettet ist. Der aus dem Adapterkörper herausragende Klemmschenkel 16 ist in dem Ausführungsbeispiel nach der Fig. 4 winkelförmig ausgebildet und greift in die Ausnehmung 10 bzw. 11 ein, wobei der Klemmschenkel den Vorsprung 12 hintergreift.

Die Ausnehmungen 10,11 haben in dem Ausführungsbeispiel nach der Fig. 1 die Form eines gleichschenkligen Dreiecks mit einem Schenkelwinkel von 90°.

Aus der Fig. 3 ergibt sich, daß die Klemmschenkel 16 zwischen den Stegen 14 und 15 angeordnet sind.

Der Federweg dieser Klemmschenkel kann, wie die Fig. 4 zeigt, durch den Endzapfen 18 einer Fixierschraube 19 begrenzt werden, die in eine Gewindebohrung 20 des Adapters eingeschraubt wird, die zwischen den Klemmschenkeln angeordnet ist.

Der Endzapfen 18 kann auch so ausgebildet sein, daß er in der Fig. 4 aufgezeigten Stellung auf die Klemmschenkel drückt und diese in eine Preßverbindung mit der Profilschiene 1 bringt, so daß der Adapter 13 kraftschlüssig gegenüber einer Bewegung in Nutlängsrichtung bzw. in der Längsrichtung der Profilschiene 1 festgelegt ist.

Aus den Fig. 3 und 5 ergibt sich, daß in den Steg 14 des Adapters 13 Stromkontaktstifte 21 angeordnet sind, die aus dem Steg 14 herausragen und bei in die Nut 2 eingesetztem Steg 14 den Mantel 5 aus Isolationsmaterial durchdringend in die Kabel 4 ragen und somit in einem elektrischen Kontakt mit den Kabeln stehen.

Zwischen den Stromkontaktstiften 21 und einer am Adapter vorgesehenen Stromabnahme 22 für eine elektrische Beleuchtung ist eine nichtdargestellte elektrische Verbindung vorhanden.

Mit dem beschriebenen Adapter können verschiedene Beleuchtungskörper kombiniert werden. Diese werden im Niedervoltbereich betrieben.

Da die Kabel 4 elektrisch isoliert sind, wird in der Profilschiene 1 kein elektrisches Potential aufgebaut. Hierdurch wird vermieden, daß Personen, die mit der Profilschiene in Berührung kommen, einer elektrischen Spannung ausgesetzt werden. Auch Spannungen, die im Niedervoltbereich liegen, werden oft als störend empfunden.

Die Nut 2 ist im Querschnitt rechtwinklig ausgebildet.

Die Querschnittsform der Profilschiene 1 kann unterschiedlich aufgebaut werden.

In dem in der Fig. 1 aufgezeigten Ausführungsbeispiel ist die Profilschiene mit einer trapezförmigen Hohlkammer 23 ausgerüstet und weist Aufnahmenuten 24 für Bauteile auf, wobei diese Aufnahmenuten zu den Seitenflächen der Profilschiene geöffnet wird.

Beim Gegenstand der Erfindung kann die Montage der Kabel und des Adapters, der im Bereich der Nut 2 an einer beliebigen Stelle vorgesehen werden kann, ohne Werkzeuge durchgeführt werden. Auch die Demontage dieser Teile ist einfacher Weise durchführbar.

## Patentansprüche

1. Profilschiene als tragendes Bauteil eines Gestells für Ausstellungs- oder Messestände, eines Regals, eines sonstigen Möbels oder eines anderen Gewerkes mit einer zur Außenseite geöffneten Nut zur Aufnahme zweier parallel zueinander verlaufender elektrischer Leitungen, wobei in den seitllichen Nutwänden hinterschnittene Flächen zur formschlüssigen und/oder kraftschlüssigen Festlegung eines Adapters vorgesehen sind, **dadurch gekennzeichnet, daß** in dem Boden der Nut (2) Rinnen (3) für elektrische Kabel (4) angeordnet und die Rinnen (3) als Kreisausformungen ausgebildet sind, die in der Bodenmitte ineinander übergehen und sich geringfügig in den Wandungsbereich erstrecken.

2. Profilschiene nach Anspruch 1, dadurch gekennzeichnet, daß die in den Rinnen (3) eingesetzten Kabel (4) sich in der Nutmitte gegeneinander abstützen und formschlüssig in den sich in die Nutwandungen erstreckenden Rinnen festgelegt sind.

3. Profilschiene nach Anspruch 1 oder 2, dadurch gekennzeichnet, daß der Querschnitt der Nut (2) rechteckförmig ausgebildet ist und in den Nutwandungen (6,7) benachbart der Nutöffnung (9) dreieckförmige Ausnehmungen (10,11) vorgesehen sind.

4. Profilschiene nach Anspruch 3, dadurch gekennzeichnet, daß die Ausnehmungen (10,11) die Form eines gleichschenkligen Dreiecks mit einem Schenkelwinkel von 90° aufweisen und die hierdurch gebildeten Vorsprünge (12) die Nutbegrenzungskanten der Nutöffnung (9) bilden.

5. Profilschiene nach Anspruch 1, dadurch gekennzeichnet, daß der Adapter (13) aus einem isolierenden Kunststoff gefertigt und als Halterung der Beleuchtung ausgebildet ist.

6. Profilschiene nach Anspruch 5, dadurch gekennzeichnet, daß der Adapter (13) in die Nut (2) eingreifende Stege (14,15) aufweist und in einem Steg (14) Stromkontaktstifte (21) angeordnet sind, die aus dem Steg herausragen und sich bei in die Nut (2) eingesetztem Adapter (13) bis in das zugeordnete, als Litzenkabel ausgebildete Kabel (4) erstrecken.

7. Profilschiene nach Anspruch 1, 5 oder 6, dadurch gekennzeichnet, daß der Adapter (13) mit federnden, aus Blechen gefertigten Klemmschenkeln (16) ausgerüstet ist, deren Befestigungsteil (17) in dem Adapter eingebettet ist.

8. Profilschiene nach Anspruch 7, dadurch gekennzeichnet, daß die Klemmschenkel (16) winkelförmig ausgebildet sind.

9. Profilschiene nach Anspruch 8, dadurch gekennzeichnet, daß der Federweg der Klemmschenkel (16) durch einen Endzapfen (18) einer Fixierschraube (19) begrenzbar ist.

10. Profilschiene nach Anspruch 9, dadurch gekennzeichnet, daß der Endzapfen (18) die Klemmschenkel in die Ausnehmungen (10,11) der Nutwandungen (6,7) preßt und den Adapter gegen eine Bewegung in Nutlängsrichtung kraftschlüssig festlegt.

11. Profilschiene nach einem der vorhergehenden Ansprüche, dadurch gekennzeichnet, daß sie im Querschnitt dreieckförmig gestaltet ist, eine trapezförmige Hohlkammer (23) aufweist und mit parallel zu den Seitenflächen verlaufenden, zu den Seitenflächen geöffneten Aufnahmenuten (24) für Bauteile versehen ist.

12. Profilschiene nach Anspruch 11, dadurch gekennzeichnet, daß der Endzapfen (18) die Klemmschenkel in die Ausnehmungen (10,11) der Nutwandungen (6,7) pressen und den Adapter gegen eine Bewegung in Nutlängsrichtung kraftschlüssig festlegen.

13. Profilschiene nach einem der vorhergehenden Ansprüche, dadurch gekennzeichnet, daß sie im Querschnitt dreieckförmig gestaltet ist, eine trapezförmige Hohlkammer (23) aufweist und mit parallel zu den Seitenflächen verlaufenden, zu den Seitenflächen geöffneten Aufnahmenuten (24) für Bauteile versehen ist.

## Claims

1. A profiled rail as bearing component for a frame for exhibition or fair stands, for a shelf, for other furniture or for another structural element having a groove open to the exterior for accommodating two electrical lines running parallel to one another, wherein surfaces undercut in the lateral groove walls are provided for interlocking and/or non-positive fixing of an adapter, characterised in that channels (3) for electrical cables (4) are arranged in the floor of the groove (2), said channels (3) being designed as circular shapes which meet in the centre of the floor and extend slightly into the wall region.

2. A profiled rail as claimed in Claim 1, characterised in that the cables (4) set into the channels (3) are supported against one another in the centre of the groove and are laid in an interlocking manner in the channels extending in the groove walls.

3. A profiled rail as claimed in Claim 1 or 2, characterised in that the cross-section of the groove (2) is designed rectangular and in that triangular recesses (10, 11) are provided in the groove walls (6, 7) adjacent to the groove opening (9).

4. A profiled rail as claimed in Claim 3, characterised in that the recesses (10, 11) exhibit the shape of an isosceles triangle with a side angle of 90° and in that the projections (12) formed thereby form groove-limiting edges of the groove opening (9).

5. A profiled rail as claimed in Claim 1, characterised in that the adapter (13) is manufactured from an insulating synthetic material and is designed as a holder for lighting.

6. A profiled rail as claimed in Claim 5, characterised in that the adapter (13) presents blocks (14, 15) engaging in the groove (2) and in that current contact pins (21) are arranged in a block (14), which project from said block and extend into the associated cable (4) designed as a stranded cable at adapter (13) set into the groove (2).

7. A profiled rail as claimed in Claim 1, 5 or 6, characterised in that the adapter (13) is fitted with spring-loaded clamping legs (16) made of sheet metal, whose connecting part (17) is embedded in the adapter.

8. A profiled rail as claimed in Claim 7, characterised in that the clamping legs (16) are designed in angular fashion.

9. A profiled rail as claimed in Claim 8, characterised in that the range of spring of the clamping legs (16) can be limited by an end journal (18) of a fixing screw (19).

10. A profiled rail as claimed in Claim 9, characterised in that the end journal (18) presses the clamping legs into the recesses (10, 11) of the groove walls (6, 7) and anchors the adapter non-positively against movement in the longitudinal direction of the groove.

11. A profiled rail as claimed in any one of the foregoing claims, characterised in that it has a triangular-shaped cross-section, a trapezoid hollow chamber (23) and is provided with grooves (24) for accommodating components open to the side surfaces and running parallel to said side surfaces.

12. A profiled rail as claimed in Claim 11, characterised in that the end journals (18) press the clamping legs into the recesses (10, 11) of the groove walls (6, 7) and anchors the adapter non-positively against movement in the longitudinal direction of the groove.

13. A profiled rail as claimed in any one of the foregoing claims, characterised in that it has a triangular-shaped cross-section, a trapezoid hollow chamber (23) and is provided with grooves (24) for accommodating components open to the side surfaces and running parallel to said side surfaces.

## Revendications

1. Rail profilé servant de composant porteur d'une structure pour stands d'exposition ou de foire, d'une étagère, d'un autre meuble ou d'un autre ouvrage, avec une rainure ouverte vers le côté extérieur destinée à recevoir deux lignes électriques s'étendant parallèlement entre elles, des surfaces détalonnées étant prévues dans les parois latérales de la rainure pour la fixation par complémentarité de forme et/ou en force d'un adaptateur, caractérisé en ce que dans le fond de la rainure (2) sont disposées des goulottes (3) pour des câbles électriques (4) et les goulottes (3) sont conformées en renfoncements circulaires qui se prolongent les uns les autres au milieu du fond et s'étendent légèrement dans la zone des parois.

2. Rail profilé selon la revendication 1, caractérisé en ce que les câbles (4) insérés dans les goulottes (3) s'appuient l'un contre l'autre au milieu de la rainure et sont fixés par complémentarité de forme dans les goulottes qui s'étendent dans les parois de la rainure.

3. Rail profilé selon la revendication 1 ou 2, caractérisé en ce que la section de la rainure (2) est de forme rectangulaire et des évidements (10, 11) triangulaires sont prévus dans les parois (6, 7) de la rainure, au voisinage de l'ouverture (9) de la rainure.

4. Rail profilé selon la revendication 3, caractérisé en ce que les évidements (10, 11) présentent la forme d'un triangle isocèle avec un angle de 90 degrés et les saillies (12) ainsi formées constituent les bords de délimitation de l'ouverture (9) de la rainure.

5. Rail profilé selon la revendication 1, caractérisé en ce que l'adaptateur (13) est fabriqué dans une matière plastique isolante et est conformé en fixation pour l'éclairage.

6. Rail profilé selon la revendication 5, caractérisé en ce que l'adaptateur (13) présente des barrettes (14, 15) qui s'engagent dans la rainure (2) et dans une barrette (14) sont disposées des broches de contact électrique (21) qui ressortent de la barrette et qui s'étendent jusque dans le câble (4) correspondant, conformé en câble torsadé, lorsque l'adaptateur (13) est inséré dans la rainure (2).

7. Rail profilé selon la revendication 1, 5 ou 6, caractérisé en ce que l'adaptateur (13) est équipé de branches de serrage (16) élastiques, fabriquées dans des tôles, dont l'élément de fixation (17) est noyé dans l'adaptateur.

8. Rail profilé selon la revendication 7, caractérisé en ce que les branches de serrage (16) sont coudées.

9. Rail profilé selon la revendication 8, caractérisé en ce que la déformation élastique des branches de serrage (16) peut être limitée par une tige terminale (18) d'une vis de fixation (19).

10. Rail profilé selon la revendication 9, caractérisé en ce que la tige terminale (18) presse les branches de serrage dans les évidements (10, 11) des parois (6, 7) de la rainure, et immobilise en force l'adaptateur contre un mouvement dans la direction longitudinale de la rainure.

11. Rail profilé selon l'une des revendications précédentes, caractérisé en ce que sa section est de forme triangulaire, en ce qu'il présente une chambre creuse (23) trapézoïdale et est pourvu, pour des composants, de rainures de réception (24) s'étendant parallèlement aux surfaces latérales et ouvertes vers les surfaces latérales.

12. Rail profilé selon la revendication 11, caractérisé en ce que la tige terminale (18) presse les branches de serrage dans les évidements (10, 11) des parois (6, 7) de la rainure, et fixe à force l'adaptateur contre un mouvement dans la direction longitudinale de la rainure.

13. Rail profilé selon l'une des revendications précédentes, caractérisé en ce que sa section est de forme triangulaire, en ce qu'il présente une chambre creuse (23) trapézoïdale et est pourvu, pour des composants, de rainures de réception (24) s'étendant parallèlement aux surfaces latérales et ouvertes vers les surfaces latérales.
